# FASCICULE DE BREVET EUROPEEN

(11) **EP 3 726 006 B1**
(45) Date de publication et mention de la délivrance du brevet: **03.05.2023**
(21) Numéro de dépôt: 20166288.9
(22) Date de dépôt: 27.03.2020
(51) Int. Cl.: F01D 5/06, F01D 11/00

(54) **ROTOR HYBRIDE AVEC INSERTS**
HYBRIDROTOR MIT EINSÄTZEN
HYBRID ROTOR WITH INSERTS

(30) Priorité: 15.04.2019 BE 201905246
(43) Date de publication de la demande: 21.10.2020
(73) Titulaire: Safran Aero Boosters SA, 4041 Herstal (BE)
(72) Inventeur: DERCLAYE, Alain, 4041 Herstal (BE)
(74) Mandataire: Lecomte & Partners

(56) Documents cités:
- WO-A1-2016/059348
- GB-A- 1 394 739
- GB-A- 2 084 664
- US-A- 3 904 316
- US-A- 4 191 510

## Description

### Domaine technique

L'invention concerne la conception d'une turbomachine, notamment un turboréacteur d'avion ou un turbopropulseur d'aéronef avec une soufflante entraînée par un réducteur. L'invention a en particulier trait à un rotor de compresseur composé de plusieurs parties dont un tambour partiellement réalisé en matériau composite.

### Technique antérieure

Le document EP 2 818 635 A1 décrit un rotor de compresseur pour turbomachine. Un tambour y est agencé, supportant plusieurs rangées annulaires d'aubes rotoriques dont au moins une aube est monobloc avec le rotor. Cette conception hybride permet un gain de temps lors de la production et de l'assemblage car, toutes les aubes n'étant pas monoblocs avec le tambour, les temps d'usinage ne sont pas aussi importants. Cependant une telle conception peut être améliorée d'un point de vue du poids du rotor. Le poids est un aspect néfaste pour un rotor de compresseur non seulement du fait qu'il nécessite plus d'énergie pour être mis en rotation, réduisant d'autant le rendement du moteur, mais aussi car il va, à sa mesure, participer au poids de l'aéronef et donc au besoin en carburant nécessaire au mouvement de l'aéronef. Le document EP 2 287 445 A1 décrit un rotor de compresseur composé de segments en matériau composite et de couronnes métalliques. Ces dernières sont pourvues de rainures en queues d'aronde pour recevoir des aubes rotoriques. Une telle conception peut présenter des hétérogénéités dans la distribution du poids axialement car les queues d'arondes nécessitent de prévoir des couronnes métalliques qui sont plus massives par endroit. De plus, il demeure une marge d'amélioration en ce qui concerne l'encombrement général et le poids global du rotor. Le taillage ou l'usinage des queues d'arondes présente également l'inconvénient du temps et du coût de fabrication. GB2084664A montre les caractéristiques techniques du préambule de la revendication indépendante 1.

### Résumé de l'invention

### Problème technique

L'invention a pour objectif de proposer un rotor plus léger et dont la fabrication ou l'assemblage sont plus économiques.

### Solution technique

L'invention a pour objet un rotor pour compresseur de turbomachine, tel un turboréacteur d'aéronef, comprenant au moins deux segments de forme sensiblement axisymétrique et en matériau composite, le rotor étant remarquable en ce qu'il comprend une couronne métallique supportant une rangée d'aubes et interposée axialement entre les deux segments, la couronne disposant d'une patte amont et d'une patte aval, chacune des pattes comprenant un insert de moulage noyé dans un des deux segments en vis-à-vis.

Ainsi, la couronne métallique forme, après le moulage avec les segments, un ensemble unitaire indémontable. Il se crée en effet lors du moulage une adhésion de surface entre les irrégularités de la surface de la patte métallique et la résine, alors liquide, utilisée pour la fabrication des segments en matériau composite. Cette adhésion de surface ne se produirait pas si la patte était assemblée aux segments après solidification de la résine.

Par « noyé », on entend que l'insert de moulage occupe un espace qui serait normalement occupé par le segment, que l'insert de moulage est substantiellement entouré du segment et/ou qu'il y a au moins trois surfaces de contact non coplanaires entre l'insert et le segment.

Selon des modes avantageux de l'invention, le rotor peut comprendre une ou plusieurs des caractéristiques suivantes, prises isolément ou selon toutes les combinaisons techniques possibles :
- les pattes sont préférentiellement de forme sensiblement cylindrique et s'étendent parallèlement à l'axe du rotor ;
- les inserts sont dentelés. Des dents permettent une plus grande surface d'adhésion entre les segments et la couronne. En effet, les creux entre deux dents sont occupés par la résine et/ou par les fibres du matériau composite. « Dents » est à comprendre dans une acception large, comprenant tous types de motifs tri-dimensionnels, y inclus des cannelures, des stries, etc. ;
- les inserts présentent des orifices radiaux occupés par le matériau composite. Solution alternative ou complémentaire aux dents, des orifices radiaux, borgnes ou débouchants, peuvent être prévus pour améliorer encore l'adhésion ;
- l'épaisseur des segments est sensiblement égale à l'épaisseur des portions respectives des pattes qui ne forment pas les inserts. Ceci permet une continuité des surfaces et moins de perturbations aérodynamiques. L'épaisseur radiale des segments est sensiblement constante, c'est-à-dire que les variations d'épaisseur radiale des segments d'une extrémité axiale à l'autre sont de moins de 20%, préférentiellement de moins de 10%, plus préférentiellement de moins de 5% ;
- les inserts ont une épaisseur radiale inférieure à l'épaisseur radiale des segments et les inserts ont une épaisseur radiale inférieure à l'épaisseur de la patte ;
- les inserts sont faits de plusieurs portions axiales dont les épaisseurs sont successivement réduites d'aval vers l'amont pour l'insert de la patte amont et/ou successivement réduites d'amont vers l'aval pour l'insert de la patte aval. Ainsi, en s'éloignant de la couronne, vers l'aval ou l'amont, l'épaisseur des pattes réduit progressivement ;
- les pattes sont venues de matière avec la couronne. Par « venue de matière » on entend qu'elles sont monoblocs et fabriquée dans un même brut de fonderie ou forge ;
- la couronne a une section en forme de lettre grecque π, avec un plateau central, une branche amont et une branche aval ;
- la patte amont est agencée à l'extrémité interne de la branche amont, et la patte aval est agencée à l'extrémité interne de la branche aval ;
- la couronne est en alliage de titane ;
- la couronne est venue de matière avec la rangée d'aubes ;
- le rotor comprend une pluralité de segments et une pluralité de couronnes, chaque couronne ayant des pattes respectives avec des inserts noyés dans deux segments respectifs de la pluralité de segments. Le rotor peut ainsi être, d'amont en aval, une succession de segments et de couronnes. L'extrémité amont ou aval peut être occupée par une couronne qui, à l'exception des autres couronnes, n'est pas intercalée entre deux segments ;
- les segments ont une surface externe munie de léchettes métalliques, les léchettes étant préférentiellement des inserts de moulage. Les léchettes permettent de créer une étanchéité avec une virole interne d'un stator.

L'invention a également pour objet un procédé de fabrication d'un rotor selon l'un des modes de réalisation ci-dessus, le procédé comprenant les étapes suivantes : (a) - la réalisation d'une patte amont et d'une patte aval, comprenant chacune un élément destiné à servir d'insert, ce dernier définissant une surface radialement externe et une surface radialement interne ; (b) - la mise en place des pattes dans un moule ; (c) - le dépôt de fibres en amont de la patte amont, en aval de la patte aval et radialement extérieurement et intérieurement, et au contact desdites surfaces externes et internes des pattes ; (d) - la mise en place d'une résine recouvrant les fibres ; (e) - la solidification de la résine.

Selon des modes avantageux de l'invention, le procédé peut comprendre une ou plusieurs des caractéristiques suivantes, prises isolément ou selon toutes les combinaisons techniques possibles :
- après l'étape (c) de dépôt des fibres, le moule est refermé et la résine est injectée dans le moule ;
- lorsque le moule est fermé, les aubes demeurent à l'extérieur du moule. Ceci permet de prévoir un moule plus compact et d'éviter la présence de résine sur les fibres. D'autre par des étapes de fabrication (usinage, polissage, contrôle métrologique) peuvent être effectuées alors que la résine refroidit ou solidifie, offrant ainsi un gain potentiel de temps de fabrication ;
- les pattes sont dentelées avant d'être mises dans le moule, et la résine et/ou les fibres pénètrent dans des espaces inter-dents ;
- les pattes sont percées d'orifices avant d'être mises dans le moule, et la résine et/ou les fibres pénètrent dans les orifices ;
- les pattes, la couronne et les aubes sont usinées dans un même brut avant que les pattes ne soient disposées dans le moule ;
- les léchettes métalliques sont positionnées dans le moule avant l'étape c de dépose des fibres.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

La conception hybride du rotor selon l'invention permet des gains substantiels en poids comparé à un rotor disposant d'un tambour métallique. Comparé à un rotor monobloc, le temps de fabrication est drastiquement réduit, car plusieurs éléments peuvent être fabriqués en parallèle avant d'être montés ensemble. Aussi, la répartition axiale du poids du rotor est plus homogène.

### Brève description des dessins

La figure 1 représente une turbomachine axiale ;
La figure 2 représente une vue en coupe schématique d'une partie de turbomachine axiale ;
La figure 3 représente une vue en coupe d'une partie de rotor selon l'invention ;
Les figures 4 à 6 montrent trois conceptions alternatives d'une patte d'un rotor selon l'invention ;
Les figures 7 à 11 illustrent le procédé de fabrication selon l'invention.

### Description des modes de réalisation

Dans la description qui va suivre, les termes « interne » (ou « intérieur ») et « externe » (ou « extérieur ») renvoient à un positionnement par rapport à l'axe du rotor qui une fois monté correspond à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié.

Les figures représentent les éléments de manière schématique, notamment sans les éléments d'assemblage ou d'étanchéité.

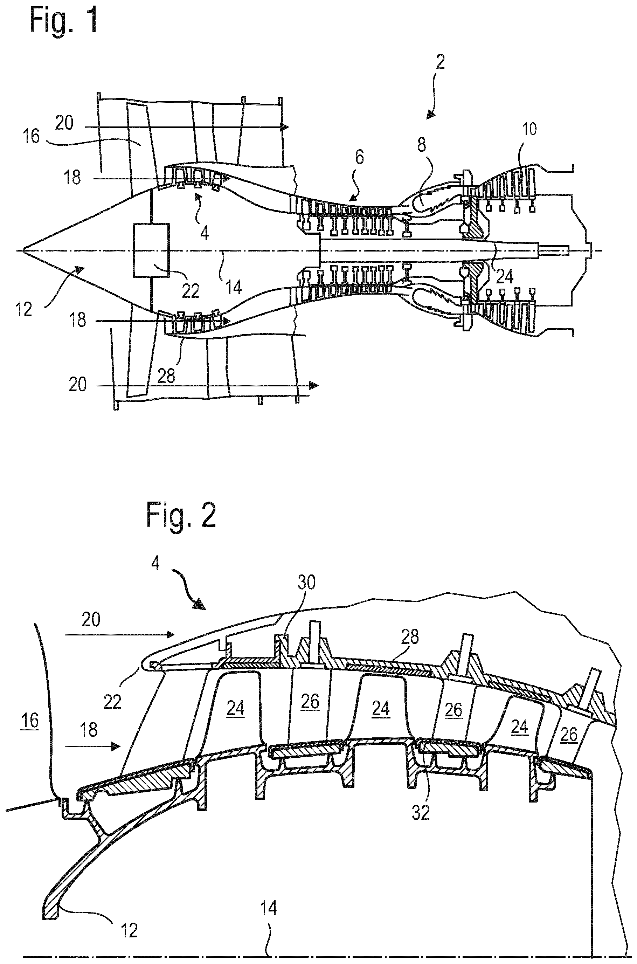

La figure 1 représente de manière simplifiée une turbomachine 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

Le rotor 12 est solidaire d'un arbre de transmission 24 monté sur le carter au moyen de deux paliers 26.

La figure 2 est une vue en coupe d'un compresseur d'une turbomachine axiale connu. Le compresseur peut comprendre un compresseur basse-pression 4. On peut y observer une partie du fan 16 ainsi que le bec de séparation 22 des flux primaire 18 et secondaire 20. Le rotor 12 peut comprendre plusieurs rangées d'aubes rotoriques 24.

Le compresseur basse-pression 4 comprend au moins un redresseur qui contient une rangée annulaire d'aubes statoriques 26. Chaque redresseur est associé au fan 16 ou à une rangée d'aubes rotoriques 24 pour en redresser le flux d'air.

Le compresseur basse-pression 4 comprend au moins un carter 28. Le carter 28 peut présenter une forme généralement circulaire ou tubulaire. Il peut être un carter externe de compresseur et peut être en matériaux composites. Le carter 28 peut comprendre des brides de fixation 30, par exemple des brides annulaires de fixation 30 pour la fixation du bec de séparation 22 et/ou pour se fixer à un carter intermédiaire de soufflante de la turbomachine. Les brides annulaires 30 peuvent être en composite et comprendre des orifices de fixation (non représentés) pour permettre une fixation par boulons.

Grâce aux matériaux composites, le carter 28 peut mesurer entre 3 et 5 mm d'épaisseur pour un diamètre supérieur à 1 mètre.

Les aubes statoriques 26 s'étendent essentiellement radialement depuis le carter 28 jusqu'à des viroles internes 32.

Dans cet exemple de rotor connu, le rotor 12 est monobloc avec trois rangées annulaires d'aubes rotoriques 24 s'étendant radialement depuis le rotor 12 jusqu'au voisinage du carter 28.

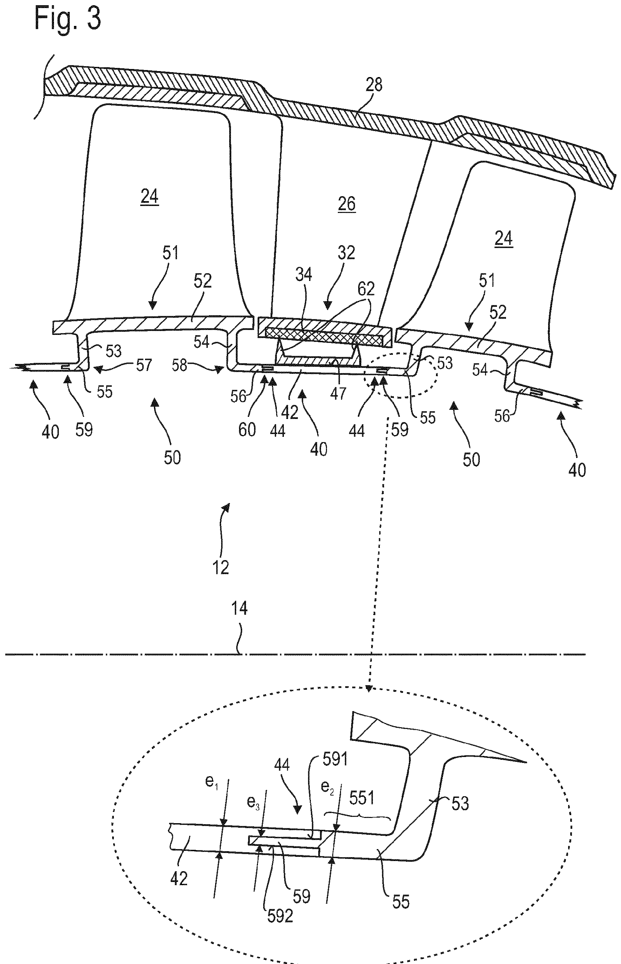

La figure 3 illustre en coupe partielle une partie d'un rotor 12 selon l'invention. Le rotor 12 comprend plusieurs segments 40 de matériaux composites. Le matériau composite peut être du type fibre de carbone avec matrice élastomère ou matrice organique. Chaque segment 40 est annulaire et dispose d'une portion centrale 42 sensiblement tubulaire et de deux portions d'extrémité 44 s'étendant axialement.

Le rotor 12 comprend également des couronnes 50 interposées entre les segments 40. Les couronnes 50 sont annulaires et faites de matériau métallique. Les couronnes 50 ont une section 51, ayant un plateau central 52 s'étendant axialement et au moins deux branches s'étendant radialement 53, 54. La section peut être en π. Chaque branche radiale 53, 54 a une extrémité interne 57, 58 à laquelle se rattache une patte respective 55, 56. Les pattes 55, 56 sont respectivement au contact des portions d'extrémité 44 des segments. Les pattes 55,56 sont des extrémités axiales (locales) des couronnes qui coopèrent avec les extrémités 44 des segments 40.

Une partie de la figure 3 est agrandie et montre que la patte 55 se termine par un insert 59 noyé dans la paroi 42 du segment 40 au niveau de sa portion d'extrémité 44. L'insert 59 a une surface externe 591 et une surface interne 592. Hormis l'insert 59, les pattes 55, 56 sont aboutées aux extrémités 44 des segments 40.

L'épaisseur e₁ du segment 40 est sensiblement identique à l'épaisseur e₂ de la portion 551 de patte 55 non noyée dans le segment 40 L'épaisseur e₃ de l'insert 59 est plus petite que les épaisseurs e₁ et e₂. Le dessin n'est pas à l'échelle. L'épaisseur e₃ peut être très inférieure à l'épaisseur e₁ (par exemple un ratio de 1 à 5). Une telle configuration permet d'assurer la continuité géométrique depuis la portion centrale 42 jusqu'à la patte 55 et éviter ainsi de générer des zones de contraintes mécaniques ou de perturbations aérodynamiques. L'épaisseur radiale des segments e₁ est sensiblement constante sur toute leur étendue.

Des léchettes métalliques 62 peuvent servir de joint d'étanchéité. Les léchettes 62 viennent en saillie du segment 40 et en particulier de sa surface externe 47. Les léchettes 62 coopèrent avec une couche d'abradable 34 aménagée intérieurement à la virole interne 32 qui supporte les aubes statoriques 26. Les léchettes métalliques 62 peuvent également être un insert de moulage des segments 40.

Le plateau central 52 supporte les aubes rotoriques 24. Les aubes 24 peuvent être soudées au plateau central 52. Alternativement, les aubes 24 sont venues de matière avec la couronne 50. L'ensemble (couronne et aube) peut être obtenu, au moins partiellement, par fonderie puis usinage.

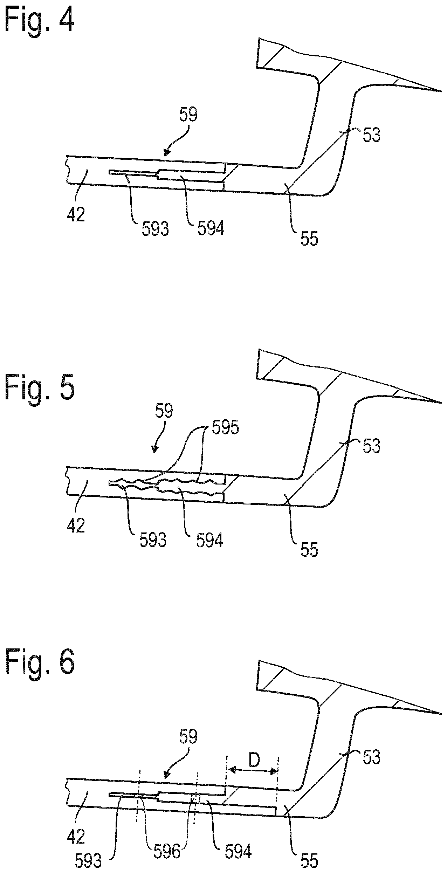

La figure 4 décrit un mode de réalisation alternatif de la patte 55. L'insert 59 peut être fait de deux (ou plus) portions axiales successives d'épaisseurs différentes, ici au nombre de deux 593, 594. Ceci permet de maximiser les surfaces au contact entre la couronne métallique 50 et le segment composite 40 sans générer de poids trop important.

La figure 5 décrit un mode de réalisation alternatif de la patte 55. L'insert 59 est ici muni de dents 595. Par « dents », on entend tout type de motif, régulier ou irrégulier, s'étendant en saillie ou en profondeur de la surface de l'insert 59. Cette solution améliore encore l'adhésion entre le segment 40 et la couronne 50. Les dents 595 peuvent être faites par toute technique adaptée, telle que l'usinage conventionnel, le moletage, l'électroérosion ou la sculpture par faisceau (type Surfi-Sculpt^{™}).

Les dents 595 peuvent être remplacées ou complétées par des orifices radiaux 596 comme représenté sur la figure 6. Les dents 595 et orifices 596 sont applicables à l'insert 59 indépendamment du nombre de portions axiales successives 593, 594.

La figure 6 illustre également le possible décalage D entre le point de jonction externe et interne entre la patte 55 et le segment 40, afin de renforcer la rigidité de la liaison et limiter les zones de concentration de contraintes. Les épaisseurs de toutes les portions 593, 594 de l'insert 59 sont inférieures à l'épaisseur du segment 42 et de la patte 55.

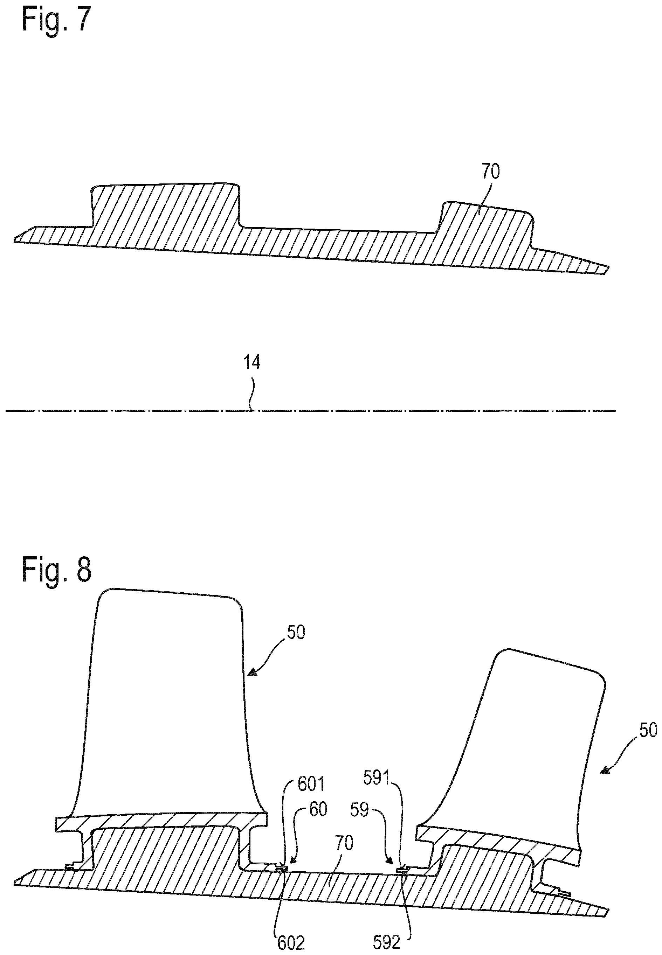

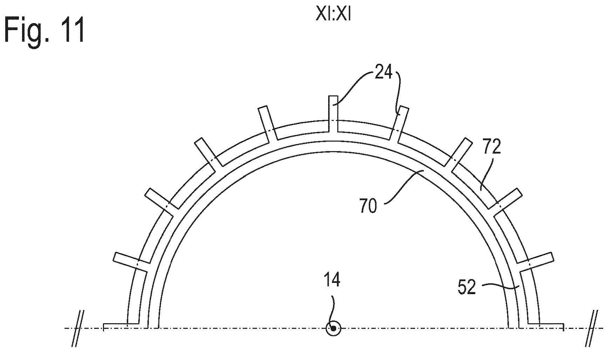

Les figures 7 à 11 illustrent un exemple de procédé de fabrication du rotor 12 selon l'invention. Dans le paragraphe qui suit, les figures sont décrites ensemble. Un moule fait de deux demi-moules 70, 72 est utilisé. Comme illustré sur la figure 11, les demi-moules 70, 72 sont de forme générale axisymétrique. Le demi-moule externe 72 et éventuellement le demi-moule interne 70 peuvent ne s'étendre que sur 180° autour de l'axe 14. Le rotor 12 peut comprendre des pattes (non représentées) pour l'assemblage des deux demi-rotor ainsi obtenus.

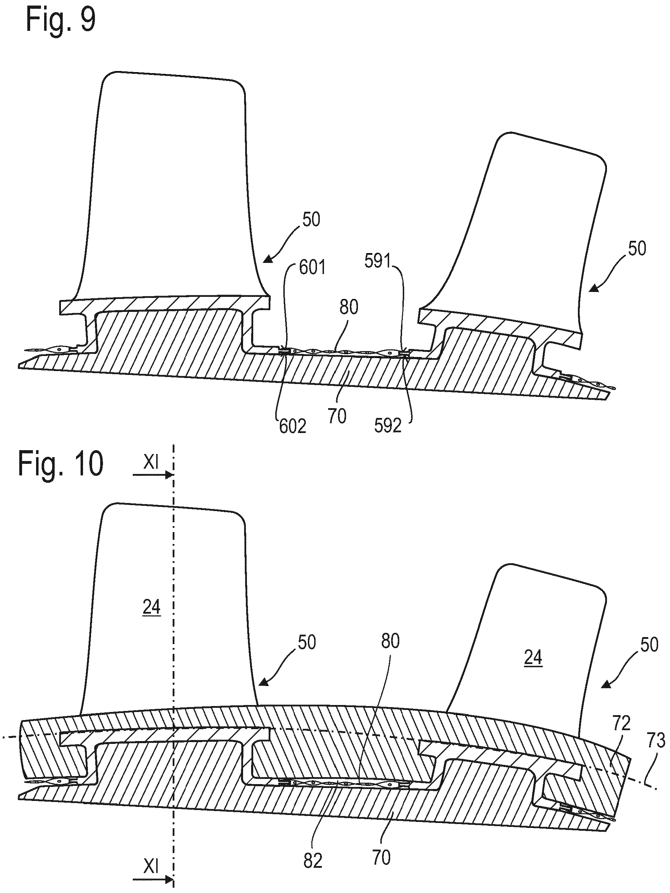

Les étapes successives du procédé de fabrication peuvent inclure les étapes suivantes :
- la fabrication des pattes 55, 56, éventuellement d'un seul tenant avec les couronnes 50. Les pattes 55, 56 peuvent être dentelées ou percées ;
- le positionnement des couronnes 50 avec leurs pattes 55, 56 sur un demi-moule interne 70 (figure 8). La figure 8 illustre également les surfaces externes 591, 601 et internes 592, 602 des pattes 59, 60 ;
- le dépôt de fibres de verre ou de carbone 80 en amont de la patte amont 55 et en aval de la patte aval 56, sur la surface externe 591, 601 et sous la surface interne 592, 602 de chaque patte 59, 60 (figure 9). Les fibres 80 peuvent être revêtues d'un enduit adhésif pour les maintenir fermement aux pattes 55, 56. Alternativement ou en complément, une couche adhésive peut être intercalée entre les pattes 55, 56 et les fibres 80 ;
- la fermeture du moule par le positionnement du demi-moule 72 (figure 10). La forme en π de la couronne 50 donne lieu à une contre-dépouille qui est contraignant pour la mise en position du demi-moule 72. Le demi-moule 72 peut être glissé circonférentiellement lorsque celui-ci s'étend sur 180° ou moins, il peut être fait d'une matière déformable (silicone), et/ou il peut être formé de deux parties radiales (non représentées) qui peuvent être séparées selon la ligne 73 de la figure 10, par exemple ;
- l'injection de résine 82 dans le moule 70, 72, par exemple via des évents non représentés ;
- la solidification de la résine 82, par exemple par réticulation ;
- l'ouverture du moule.

Ainsi, la résine 82 et/ou les fibres 80 pénètrent dans des espaces inter-dents et/ou dans les orifices.

Comme illustré sur la figure 10, les aubes 24 demeurent à l'extérieur du moule 70, 72.

La figure 11 montre en vue de coupe selon l'axe XI:XI (défini en figure 10) les demi-moules 70, 72 et leurs positions autour du plateau central 52 et des aubes 24.

En complément, les léchettes 62 peuvent être également positionnées sur les fibres 80, avant la fermeture du moule 70, 72, afin de servir d'insert de moulage.

Dans un mode de réalisation alternatif, les dents sont réalisées par modification de structure de la patte 55, 56, en appliquant un faisceau sur la patte mise en mouvement oscillatoire (comme par exemple le procédé utilisé dans WO 2004/028731 A1). Les dents peuvent ainsi être réalisées alors même que le moule est fermé et que la résine est encore malléable.

Le procédé de fabrication peut comprendre une ou plusieurs étapes de chauffe.

Les différentes figures montrent plusieurs modes de réalisation possibles pour les pattes et leur assemblage aux segments. L'homme du métier remarquera que l'invention ne se limite pas à ces exemples.

Les pattes et/ou les inserts de chacun des exemples de modes de réalisation illustrés peuvent s'étendre circonférentiellement sur toute l'étendue circonférentielle de la couronne. Alternativement, une distribution circonférentielle de pattes et/ou inserts de quelques degrés d'angle peut être prévue.

## Revendications

1. Rotor (12) pour compresseur de turbomachine (2), tel un turboréacteur d'aéronef, comprenant au moins deux segments (40) de forme sensiblement axisymétrique et en matériau composite, le rotor (12) étant **caractérisé en ce qu'**il comprend une couronne métallique (50) supportant une rangée d'aubes (24) et interposée axialement entre les deux segments (40), la couronne (50) disposant d'une patte amont (55) et d'une patte aval (56), chacune des pattes (55, 56) comprenant un insert (59, 60) de moulage noyé dans un des deux segments (40) en vis-à-vis.

2. Rotor (12) selon la revendication 1, **caractérisé en ce que** les inserts (59, 60) sont dentelés.

3. Rotor (12) selon l'une des revendications précédentes, **caractérisé en ce que** les inserts (59, 60) présentent des orifices radiaux (596) occupés par le matériau composite (80, 82).

4. Rotor (12) selon l'une des revendications précédentes, **caractérisé en ce que** l'épaisseur (e₁) des segments (40) est sensiblement égale à l'épaisseur (e₂) des portions (551) respectives de pattes (55, 56) qui ne forment pas les inserts (59, 60) et/ou les inserts (59, 60) ont une épaisseur radiale (e₃) inférieure à l'épaisseur radiale (e₁) des segments (40) et les inserts (59, 60) ont une épaisseur radiale (e₃) inférieure à l'épaisseur de la patte (e₂).

5. Rotor (12) selon l'une des revendications précédentes, **caractérisé en ce que** les inserts (59, 60) sont faits de plusieurs portions axiales (593, 594) dont les épaisseurs sont successivement réduites d'aval vers l'amont pour l'insert (59) de la patte amont (55), et/ou successivement réduites d'amont vers l'aval pour l'insert (60) de la patte aval (56).

6. Rotor (12) selon l'une des revendications précédentes, **caractérisé en ce que** les pattes (55, 56) sont venues de matière avec la couronne (50).

7. Rotor (12) selon l'une des revendications précédentes, **caractérisé en ce que** la couronne (50) a une section (51) en forme de lettre grecque π, avec un plateau central (52), une branche amont (53) et une branche aval (55), et préférentiellement la patte amont (55) est agencée à l'extrémité interne (57) de la branche amont (53) et la patte aval (60) est agencée à l'extrémité interne (58) de la branche aval (54).

8. Rotor (12) selon l'une des revendications précédentes, **caractérisé en ce qu'**il comprend une pluralité de segments (40) et une pluralité de couronnes (50), chaque couronne (50) ayant des pattes (55, 56) respectives avec des inserts (59) noyés dans deux segments (40) respectifs de la pluralité de segments (40).

9. Rotor (12) selon l'une des revendications précédentes, **caractérisé en ce que** les segments (40) ont une surface externe (47) munie de léchettes métalliques (62), les léchettes (62) étant préférentiellement des inserts de moulage.

10. Procédé de fabrication d'un rotor (12) selon l'une des revendications précédentes, le procédé comprenant les étapes suivantes :
a - la réalisation d'une patte amont (55) et d'une patte aval (56), contenant chacune un élément destiné à servir d'insert (59, 60), ce dernier définissant une surface radialement externe (591, 601) et une surface radialement interne (592, 602) ;
b - la mise en place des pattes dans un moule (70, 72) ;
c - le dépôt de fibres (80) en amont de la patte amont (55), en aval de la patte aval (56) et radialement extérieurement et intérieurement, et au contact desdites surfaces externes (591, 601) et internes (592, 602) ;
d - la mise en place d'une résine (82) recouvrant les fibres (80) ;
e - la solidification de la résine (82).

11. Procédé selon la revendication 10, **caractérisé en ce qu'**après l'étape c de dépôt des fibres (80), le moule (70, 72) est refermé et la résine (82) est injectée dans le moule (70, 72), et préférentiellement lorsque le moule (70, 72) est fermé, les aubes (24) demeurent à l'extérieur du moule (70, 72).

12. Procédé selon l'une des revendications 10 ou 11, **caractérisé en ce que** les pattes (55, 56) sont dentelées avant d'être mises dans le moule (70, 72), et la résine (82) et/ou les fibres (80) pénètrent dans des espaces inter-dents.

13. Procédé selon l'une des revendications 10 à 12, **caractérisé en ce que** les pattes (55, 56) sont percées d'orifices (596) avant d'être mises dans le moule (70, 72), et la résine (82) et/ou les fibres (80) pénètrent dans les orifices (596).

14. Procédé selon l'une des revendications 10 à 13, **caractérisé en ce que** les pattes (55, 56), la couronne (50) et les aubes (24) sont usinées dans un même brut avant que les pattes (55, 56) ne soient disposées dans le moule (70, 72).

15. Procédé selon l'une des revendications 10 à 14 pour la réalisation d'un rotor selon la revendication 9, **caractérisé en ce que** les léchettes métalliques (62) sont positionnées dans le moule (70, 72) avant l'étape c de dépose des fibres (80).

## Patentansprüche

1. Ein Rotor (12) für einen Turbomaschinenkompressor (2), wie beispielsweise ein Flugzeug-Turbotriebwerk, der aus mindestens zwei Segmenten (40) mit deutlich achsensymmetrischer Form und aus Verbundwerkstoff besteht, wobei der Rotor (12) **dadurch gekennzeichnet ist, dass** er eine metallische Krone (50) umfasst, die eine Reihe von Schaufeln (24) trägt und axial zwischen den beiden Segmenten (40) angeordnet ist, wobei die Krone (50) mit einer stromaufwärts gelegenen Klammer (55) und einer stromabwärts gelegenen Klammer (56) versehen ist, wobei jede der Klammern (55, 56) einen Gusseinsatz (59, 60) aufweist, der in eines der beiden Segmente (40) eingebettet ist, die einander gegenüberliegend angeordnet sind.

2. Ein Rotor (12) nach Anspruch 1, **dadurch gekennzeichnet, dass** die Gusseinsatz (59, 60) gezackt sind.

3. Ein Rotor (12) nach einem der vorhergehenden Ansprüche, **dadurch gekennzeichnet, dass** die Gusseinsätze (59, 60) radiale Löcher (596) aufweisen, die von dem Verbundmaterial (80, 82) belegt sind.

4. Ein Rotor (12) nach einem der vorhergehenden Ansprüche, **dadurch gekennzeichnet, dass** die Dicke (e₁) der Segmente (40) ungefähr gleich der Dicke (e₂) der jeweiligen Abschnitte (551) der Klammern (55, 56) ist, die nicht die Gusseinsätze (59, 60) bilden und/oder die Gusseinsätze (59, 60) eine radiale Dicke (e₃) aufweisen, die kleiner ist als die radiale Dicke (e₁) der Segmente (40), und die Gusseinsätze (59, 60) eine radiale Dicke (e₃) aufweisen, die kleiner ist als die Dicke (e2) der Klammer.

5. Ein Rotor (12) nach einem der vorhergehenden Ansprüche, **dadurch gekennzeichnet, dass** die Gusseinsätze (59, 60) eine Vielzahl von axialen Abschnitten (593, 594) umfassen, deren Dicken von stromabwärts nach stromaufwärts für den Gusseinsatz (59) der stromaufwärts gelegenen Klammer (55) und/oder von stromaufwärts nach stromabwärts für den Gusseinsatz (60) der stromabwärts gelegenen Klammer (56) nacheinander verringert sind.

6. Ein Rotor (12) nach einem der vorhergehenden Ansprüche, **dadurch gekennzeichnet, dass** die Klammern (55, 56) mit der Krone (50) ein einheitliches Bauteil bilden.

7. Ein Rotor (12) nach einem der vorhergehenden Ansprüche, **dadurch gekennzeichnet, dass** die Krone (50) einen Querschnitt (51) in Form des griechischen Buchstabens *π* aufweist, mit einem zentralen Plateau (52), einem stromaufwärtigen Ast (53) und einem stromabwärtigen Ast (55), und vorzugsweise ist die stromaufwärtige Klammer (55) am inneren Ende (57) des stromaufwärtigen Astes (53) und die stromabwärtige Klammer (60) am inneren Ende (58) des stromabwärtigen Astes (54) angeordnet.

8. Ein Rotor (12) nach einem der vorhergehenden Ansprüche, **dadurch gekennzeichnet, dass** er eine Vielzahl von Segmenten (40) und eine Vielzahl von Kronen (50) umfasst, wobei jede Krone (50) mit Klammern (55, 56) versehen ist, die Gusseinsätze (59) aufweisen, die in zwei entsprechende Segmente (40) der Vielzahl von Segmenten (40) eingebettet sind.

9. Ein Rotor (12) nach einem der vorhergehenden Ansprüche, **dadurch gekennzeichnet, dass** die Segmente (40) eine Außenfläche (47) aufweisen, die mit metallischen Dichtungselementen (62) versehen ist, wobei die Dichtungselemente (62) vorzugsweise Gusseinsätze sind.

10. Ein Verfahren zur Herstellung eines Rotors (12) nach einem der vorangehenden Ansprüche, wobei das Verfahren die folgenden Schritte umfasst:
a - Herstellung einer stromaufwärts gelegenen Klammer (55) und einer stromabwärts gelegenen Klammer (56), die jeweils ein Element enthalten, das als Gusseinsatz (59, 60) verwendet werden soll, wobei der letztere eine radiale Außenfläche (591, 601) und eine radiale Innenfläche (592, 602) definiert;
b - Einsetzen der Klammern in eine Matrize (70, 72);
c - Ablegen von Fasern (80) stromaufwärts der stromaufwärts gelegenen Klammer (55), stromabwärts der stromabwärts gelegenen Klammer (56) und radial nach außen und innen und in Kontakt mit den äußeren (591, 601) und inneren (592, 602) Oberflächen;
d - Aufbringen eines Harzes (82), um die Fasern (80) zu bedecken;
e - Verfestigung des Harzes (82).

11. Ein Verfahren nach Anspruch 10, **dadurch gekennzeichnet, dass** nach dem Schritt c des Ablegens der Fasern (80) die Form (70, 72) geschlossen wird und das Harz (82) in die Form (70, 72) eingespritzt wird, vorzugsweise wenn die Form (70, 72) geschlossen ist, wobei die Schaufeln (24) außerhalb der Form (70, 72) verbleiben.

12. Ein Verfahren nach einem der Ansprüche 10 oder 11, **dadurch gekennzeichnet, dass** die Klammern (55, 56) vor dem Einsetzen in die Form (70, 72) eingekerbt werden und das Harz (82) und/oder die Fasern (80) in die Lücken zwischen den Kerben eindringen.

13. Ein Verfahren nach einem der Ansprüche 10 bis 12, **dadurch gekennzeichnet, dass** die Klammern (55, 56) perforiert und mit Löchern (596) versehen werden, bevor sie in die Matrize (70, 72) eingesetzt werden, und das Harz (82) und/oder die Fasern (80) in die Löcher (596) eindringen.

14. Ein Verfahren nach einem der Ansprüche 10 bis 13, **dadurch gekennzeichnet, dass** die 5 Klammern (55, 56), die Krone (50) und die Schaufeln (24) aus einem einzigen Rohling bearbeitet werden, bevor die Klammern (55, 56) in die Matrize (70, 72) eingesetzt werden.

15. Ein Verfahren nach einem der Ansprüche 10 bis 14 zur Herstellung eines Rotors nach Anspruch 9, **dadurch gekennzeichnet, dass** die Metalldichtungselemente (62) vor dem Faserabscheidungsschritt c (80) in der Matrize (70, 72) eingesetzt werden.

## Claims

1. Rotor (12) for a turbomachine compressor (2), such as an aircraft turbojet engine, comprising at least two segments (40) substantially axisymmetric in shape and made of composite material, the rotor (12) being **characterised in that** it comprises a metal crown (50) supporting a row of blades (24) and axially interposed between the two segments (40), the crown (50) having an upstream lug (55) and a downstream lug (56), each of the lugs (55, 56) comprising a moulding insert (59, 60) embedded in one of the two opposing segments (40).

2. Rotor (12) according to claim 1, **characterised in that** the inserts (59, 60) are serrated.

3. Rotor (12) according to any of the preceding claims, **characterised in that** the inserts (59, 60) have radial openings (596) occupied by the composite material (80, 82).

4. Rotor (12) according to any of the preceding claims, **characterised in that** the thickness (t₁) of the segments (40) is substantially equal to the thickness (e₂) of the respective portions (551) of lugs (55, 56) which do not form the inserts (59, 60) and/or the inserts (59, 60) have a radial thickness (e₃) less than the radial thickness (e₁) of the segments (40) and the inserts (59, 60) have a radial thickness (e₃) less than the thickness of the lug (e₂).

5. Rotor (12) according to any of the preceding claims, **characterised in that** the inserts (59, 60) are made up of several axial portions (593, 594) whose thickness dimensions are successively reduced from downstream to upstream for the insert (59) of the upstream lug (55), and/or successively reduced from upstream to downstream for the insert (60) of the downstream lug (56).

6. Rotor (12) according to any of the preceding claims, **characterised in that** the lugs (55, 56) are integral with the crown (50).

7. Rotor (12) according to any of the preceding claims, **characterised in that** the crown (50) has a cross-section (51) in the shape of the Greek letter *π*, with a central plate (52), an upstream branch (53) and a downstream branch (55), wherein the upstream lug (55) is preferably arranged at the inner end (57) of the upstream branch (53) and the downstream lug (60) is arranged at the inner end (58) of the downstream branch (54).

8. Rotor (12) according to any of the preceding claims, **characterised in that** it comprises a plurality of segments (40) and a plurality of crowns (50), each crown (50) having respective lugs (55, 56) with inserts (59) embedded in two respective segments (40) of the plurality of segments (40).

9. Rotor (12) according to any of the preceding claims, **characterised in that** the segments (40) have an outer surface (47) provided with metal sealing elements (62), the sealing elements (62) being preferably moulding inserts.

10. A method for manufacturing a rotor (12) according to any of the preceding claims, the method comprising:
a - making an upstream lug (55) and a downstream lug (56), each containing a member intending to serve as an insert (59, 60), the latter defining a radially external surface (591, 601) and a radially internal surface (592, 602);
a - placing the lugs in a mould (70, 72);
c - depositing fibres (80) upstream of the upstream lug (55), downstream of the downstream lug (56) and radially outwardly and inwardly, and in contact with said external (591, 601) and internal (592, 602) surfaces;
d - placing a resin (82) to cover the fibres (80);
e - solidifying the resin (82).

11. The method according to claim 10, **characterised in that** after completing step c consisting in depositing the fibres (80), the mould (70, 72) is closed and the resin (82) is injected into the mould (70, 72), and preferentially when the mould (70, 72) is closed, the blades (24) remain outside the mould (70, 72).

12. The method according to any of claims 10 or 11, **characterised in that** the lugs (55, 56) are serrated before being placed in the mould (70, 72), and the resin (82) and/or fibres (80) penetrate the spaces between the teeth.

13. The method according to any of claims 10 to 12, **characterised in that** the lugs (55, 56) are pierced with holes (596) before being placed in the mould (70, 72), and the resin (82) and/or fibres (80) penetrate into the holes (596).

14. The method according to any of claims 10 to 13, **characterised in that** the lugs (55, 56), the crown (50) and the blades (24) are machined from a single blank before the lugs (55, 56) are placed in the mould (70, 72).

15. The method according to any of claims 10 to 14 for making a rotor according to claim 9, **characterised in that** the metal sealing elements (62) 10 are positioned in the mould (70, 72) prior to step c consisting in depositing the fibres (80).
